# EUROPEAN PATENT SPECIFICATION

(11) **EP 2 470 347 B1**
(45) Date of publication and mention of the grant of the patent: **13.03.2013**
(21) Application number: 10714498.2
(22) Date of filing: 13.03.2010
(51) Int. Cl.: B29C 49/42, B65G 47/90

(54) **HIGH-SPEED TAKEOUT SYSTEM**
HOCHGESCHWINDIGKEITSENTNAHMESYSTEM
SYSTÈME DE DÉMOULAGE À VITESSE ÉLEVÉE

(43) Date of publication of application: 04.07.2012
(73) Proprietor: Graham Packaging Company, L.P., York, PA 17402 (US)
(72) Inventor: WOINSKI, Grzegorz Jaroslaw, PL-03-580 Warszawa (PL)
(74) Representative: De Anna, Pier Luigi
(86) International application number: PCT/PL2010/050010
(87) International publication number: WO 2011/115512

(56) References cited:
- EP-A2- 1 318 114
- EP-A2- 1 747 875
- CA-A1- 2 359 988
- US-A- 4 886 443
- US-A1- 2007 176 330

## Description

### TECHNICAL FIELD

The present invention relates to devices and methods which remove blow-molded products from between open mold halves and transport the products for subsequent processing and, more particularly, to take-out devices for high-speed blow-molding machines.

### BACKGROUND OF THE INVENTION

High-speed blow-molding machines are well known. These machines include a large number of molds arranged in a circle and rotated around the circle at a speed as high as 8-10 revolutions per minute or possibly higher. A continuous parison is or parisons are extruded between open mold halves, which close to capture parison segments in mold cavities. The captured parison segments are blown in the cavities and set to form blow-molded products. The molds open at an ejection station and the products are removed.

Modern blow-molding machines are used with take-out mechanisms which remove the molded products from the molds. One specific product made by blow-molding machines are containers and, even more specifically, bottles. The bottles are conventionally moved by the take-out mechanism to a discard bin if the bottles are defective, placed on a conveyor for transport to a trim station where flash formed during blow molding is removed from the bottles and the bottles are finished as required, or loaded directly into packaging (e.g., boxes) for further transportation.

An older, conventional bottle manufacturing apparatus has, as shown in Fig. 1 and described in U.S. Patent No. 4,737,183 issued to Doi et al., a blow mold 1 including a pair of separate and movable mold halves 2a and 2b and a bottom plate 3 held between the bottom portions of the mold halves 2a and 2b. The bottom plate 3 is mounted on a bracket 6 which, in turn, is mounted on a body 5 of the bottle manufacturing apparatus. The bracket 6 slides up and down, guided by a slide mechanism 4 such as a dovetail groove. A threaded shaft 7 drives the bracket 6 and the shaft 7 is rotatably mounted on the body 5 of the apparatus. An operating shaft 8 extends at right angles to the threaded shaft 7. A rotating drive mechanism 9 transmits the rotation of the operating shaft 8 to the threaded shaft 7.

An air cylinder 10 is slidably mounted on the body 5 of the apparatus for movement in the up and down direction. A support member 11 is fixed on and extends upwardly from the cylinder 10. The support member 11 has a supporting shaft 12 extending transversely to the support member 11. A tong arm 13 is pivoted on the supporting shaft 12 at one end. This assembly is a take-out mechanism 14 for taking a bottle "A" molded in the blow mold 1 out of the blow mold 1.

The tong arm 13 has a tong head 16 rotatably mounted on a shaft 15 at the end opposite the supporting shaft 12. A chain 18 extends around a sprocket wheel 17a fixedly mounted on the supporting shaft 12 and a sprocket wheel 17b supported by the shaft 15 and on which the tong head 16 is fixedly mounted. A rack 20 engages a gear and is moved up and down by a piston 10a in the air cylinder 10. Tongs 21 are mounted on the tong head 16 and adapted to grip a mouth portion of the bottle. "A" molded in the blow mold 1 and then to release the bottle A.

A threaded shaft 22 engages the air cylinder 10 and rotates on the body 5 of the apparatus. An operating shaft 24 drives the threaded shaft 22 through a rotary driving mechanism 25. A conveyor 26 transfers a molded bottle A away from beneath the take-out mechanism 14.
[0007A] In U.S. Patent Application Publication No. 2007/0176330, McGlynn et al. teach a single-sided, shuttle-type, blow-molded method and apparatus including no more than one mold. An extruder substantially continuously extrudes a thermoplastic material in tubular form at a moldable temperature downwardly along a vertical axis. The apparatus includes a mold having a set of mold parts adapted to open and close relative to each other to define, when closed, a mold cavity. A shuttle having the mold mounted on it is arranged to move along a closed path from a first position in which the mold engages, when open, a finite length of the thermoplastic tube, to a second position away from the first position. The apparatus further includes a blow head adapted to blow the finite length of the thermoplastic tube to form the container as the mold moves from the first position to the second position of the closed path.

Some blow-molding machines use multi-cavity molds able to mold sets of bottles during each cycle of operation. It is conventional to remove a bottle from a single-cavity blow mold using a vacuum plug inserted into the neck of the bottle. Such take-out mechanisms cannot rapidly and reliably remove sets of blow molded bottles from plural-cavity molds, however, and place the bottles in a take-away conveyor while maintaining the orientation of the bottles in the sets. U.S. Patent No. 6,062,845 issued to Conaway et al. addresses this problem.

Conaway et al. disclose a take-out mechanism for removing sets of blow-molded bottles from a blow mold. The mechanism includes a rotary turret, a take-away conveyor, and a drive for moving the turret between the blow mold and the take-away conveyor. The turret has a number of sides with a plurality of vacuum plugs extending from each side. The drive moves the turret toward the mold to extend a set of plugs on one side of the turret into mold cavities and vacuum-capture bottles molded in the cavities. After opening of the mold, the turret is lowered and rotated 90 degrees to position the vacuum-held bottles at the infeed end of the take-away conveyor. Rotation of the turret positions a second set of plugs facing a second mold moved to the take-out position. Subsequent rapid retraction of the turret moves the set of removed bottles into the take-away conveyor and powers the conveyor to receive the bottles while maintaining orientation between individual bottles. The turret is raised to remove the plugs from the bottles held in the conveyor and then rapidly extended back to the next mold to position the second set of plugs in bottles in the mold.

Some take-out mechanisms are directed to particular types of blow-molding machines. For example, U.S. Patent No. 6,923,933 issued to Fiorani et al. teaches a take-out device for removing blow-molded products from molds in a high-speed rotary blow-molding machine. The device includes a plurality of transfer heads which are moved in to and out of an ejection station to clamp bottles stripped from the molds and move the bottles away from the station toward a take-away conveyor. The bottles are turned ninety degrees before placement on the take-away conveyor.

Other take-out mechanisms are designed to facilitate specific operations. For example, U.S. Patent No. 7,632,089 issued to Bates et al. teaches a take-out and cooling operation. The apparatus conveys molded plastic articles from a molding machine to and through a cooling station. The take-out mechanism has a main support, a conveyor carried by the main support for movement in an endless path, a cam adjacent to the support, a plurality of arms carried by the conveyor for movement with the conveyor along the endless path and including a follower responsive to the contour of the cam to vary the position of the arms relative to the support, and at least one holder carried by each arm. Each holder is adapted to receive and carry at least one molded article to facilitate in conveying the molded articles and is flexible and resilient to permit relative movement of at least a portion of the holder relative to its associated arm.

There remains a need in the art for an improved apparatus and method that overcome the shortcomings of conventional solutions. An object of the present invention is to decrease the cycle time (i.e., increase the speed of production output) required to manufacture plastic products (specifically containers and more specifically bottles). A related object is to reliably and rapidly transfer blow-molded products from open molds of blow-molding machines at an ejection station to a take-away position such as on a conveyor. A further related object is to complete such transfer without disturbing the relative positions of the bottles during removal and placement on the conveyor. Still another related object is to provide a take-out mechanism that operates at a high production rate and is capable of removing a set of bottles from a mold faster than every two seconds.

Another object is to provide a universal take-out mechanism versatile enough to work with different types of blow-molding machines and facilitate different operations. A related object is to permit the operator to program changes for different bottles and applications without implementing any mechanical changes.

Yet another object is to decrease the cost and complexity of the take-out mechanism. A related object is to avoid complicated tooling required to engage a particular size and shape bottle. Further related objects are to reduce the number of components and to provide a lighter weight assembly all with a smaller footprint. It is still another object of the present invention to provide a take-out mechanism that physically captures the blow-molded products between mold halves at an ejection station without abruptly changing the velocity of the products, moves the captured products away from the mold without gravity release, and places the captured products on a take-away conveyor in a known position for subsequent processing. The take-out device should operate without damage to the blow molded products.

### BRIEF SUMMARY OF THE INVENTION

To achieve these and other objects, and to meet these and other needs, and in view of its purposes, the present invention provides a takeout for transferring products from the mold of a blow-molding machine to a discharge position. The takeout has two, connected, mirror-image frame members defining parallel planes. A flexible slide is connected to each respective frame member on one end and to a respective arm on the opposite end. The arms have lifting fingers which hold, carry, and release a product. Carriages provide tracks along which the arms travel in the horizontal direction; the carriages themselves travel along guides of the frame members in the vertical direction. Driven by motors, belts carry each arm and its lifting finger along predetermined, closed, endless paths including a mold position, a series of intermediate positions, and a discharge position. A computer controls independently one or more of the on-off status, the direction of rotation, and the speed of rotation of each of the motors and controls independently each of the lifting fingers.

More specifically, the takeout has a first frame member with a generally rectangular shape and a pair of first guides. The first frame member defines a first plane with a horizontal direction and a vertical direction. A second frame member is connected to the first frame member, has a generally rectangular shape and a pair of second guides, and defines a second plane parallel to the first plane.

A first flexible slide has a foot connected to the first frame member and a head connected to a first arm. The first flexible slide moves in the first plane defined by the first frame member to locate the first arm at any point in the first plane. A second flexible slide has a foot connected to the second frame member and a head connected to a second arm. The second flexible slide moves in the second plane defined by the second frame member to locate the second arm at any point in the second plane.

A pair of first motors is affixed to the first frame member. Each of the pair of first motors rotates independently in the same direction or in opposite directions. A pair of second motors is affixed to the second frame member. Each of the pair of second motors rotates independently in the same direction or in opposite directions.

A first belt associated with the first frame member is driven by the independent operation of each of the pair of first motors and carries the first arm. A second belt associated with the second frame member is driven by the independent operation of each of the pair of second motors and carries the second arm.

A first carriage having a first track along which the first arm travels in the horizontal direction, itself travels along the pair of first guides of the first frame member in the vertical direction. A second carriage having a second track along which the second arm travels in the horizontal direction, itself travels along the pair of second guides of the second frame member in the vertical direction. First and second lifting fingers are carried by the first and second arms, respectively, each of the lifting fingers holding, carrying, and releasing a product. A computer controls independently one or more of the on-off status, the direction of rotation, and the speed of rotation of each of the motors and controls independently each of the lifting fingers.

The first arm and the first lifting finger move along a first, predetermined, closed, endless path including a mold position, a series of intermediate positions, and a discharge position. The second arm and the second lifting finger move along a second, predetermined, closed, endless path including a mold position, a series of intermediate positions, and a discharge position. The first path and the second path may be identical and, if so, travel of the first arm along the first path is out of phase with travel of the second arm along the second path to avoid collisions.

It is to be understood that both the forgoing general description and the following detailed description are exemplary, but are not restrictive, of the invention.

### BRIEF DESCRIPTION OF THE DRAWING

The invention is best understood from the following detailed description when read in connection with the accompanying drawing. It is emphasized that, according to common practice, the various features of the drawing are not to scale. On the contrary, the dimensions of the various features are arbitrarily expanded or reduced for clarity. Included in the drawing are the following figures:

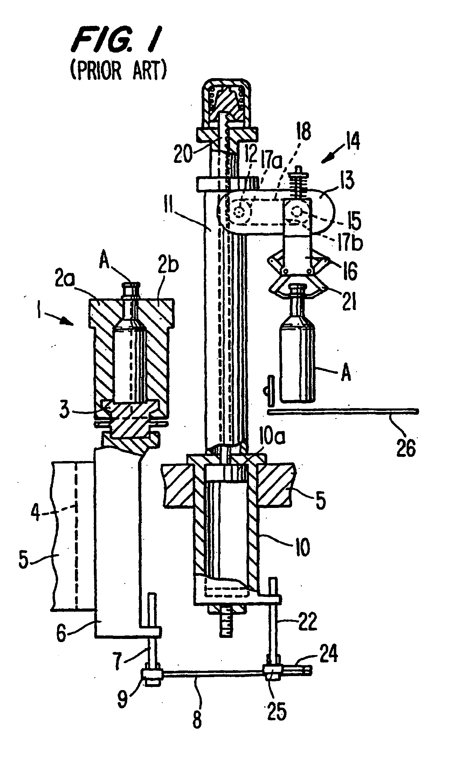

Fig. 1 is a front view of a conventional bottle manufacturing apparatus;

Fig. 2 is a perspective view of the frame of the sophisticated bottle take-out system used by the assignee of the present application in combination with its high-speed blow-molding machines;

Fig. 3 illustrates the pick-up assembly of the bottle take-out system shown in Fig. 2;

Fig. 4 is a perspective view of the takeout, from the junction of the front and left sides, according to an embodiment of the present invention;

Fig. 5 is a right side view of the takeout illustrated in Fig. 4;

Fig. 6 is a front view of the takeout illustrated in Figs. 4 and 5;

Fig. 7 is a top view of the takeout illustrated in Figs. 4, 5, and 6;

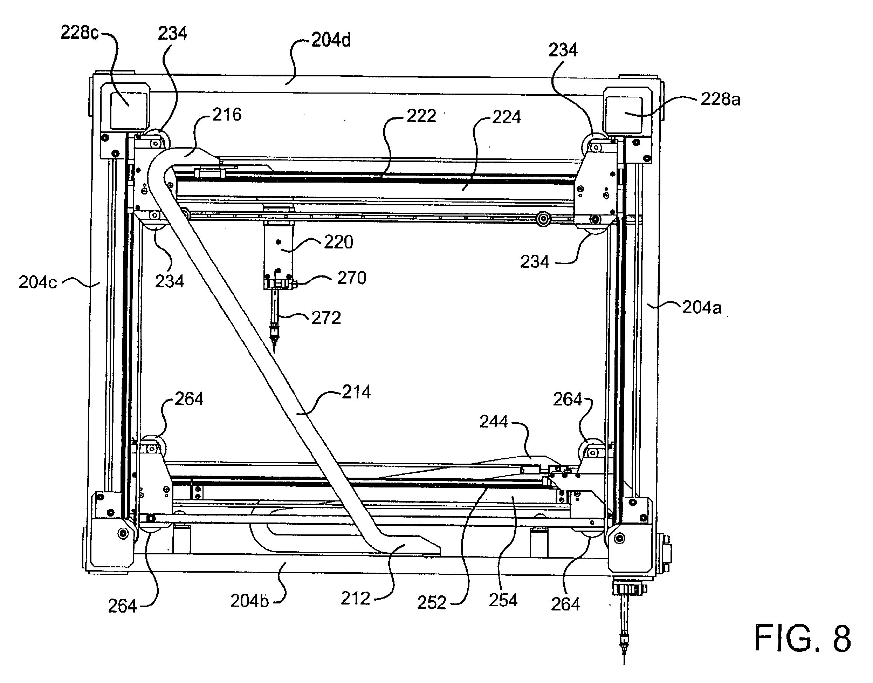

Fig. 8 is left side view of the takeout illustrated in Figs. 4, 5, 6, and 7;

Fig. 9 is a perspective view of the takeout illustrated in Figs. 4, 5, 6, 7, and 8, from the junction of the front and right sides; and

Fig. 10 is a view, in partial cross section, of a lifting finger of the takeout according to an embodiment of the present invention.

### DETAILED DESCRIPTION OF THE INVENTION

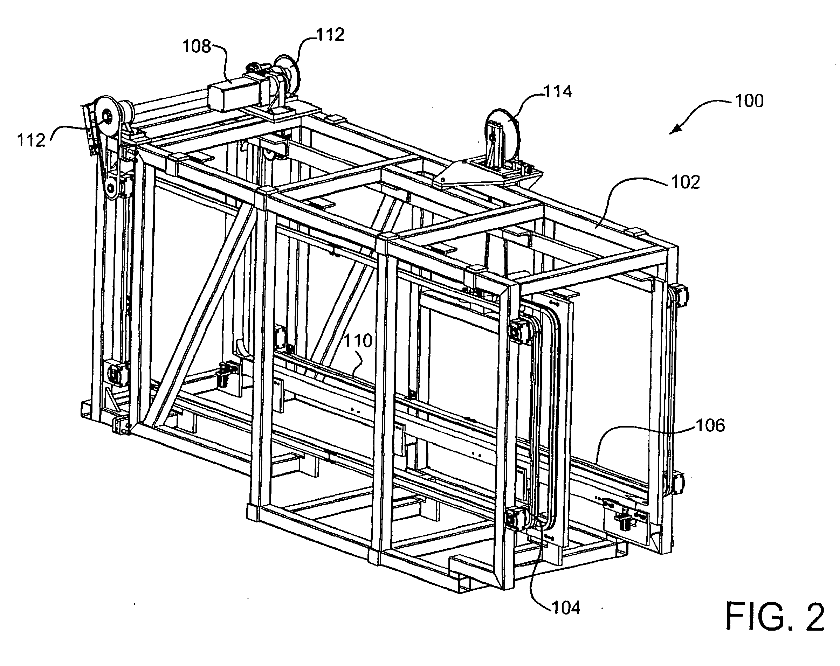

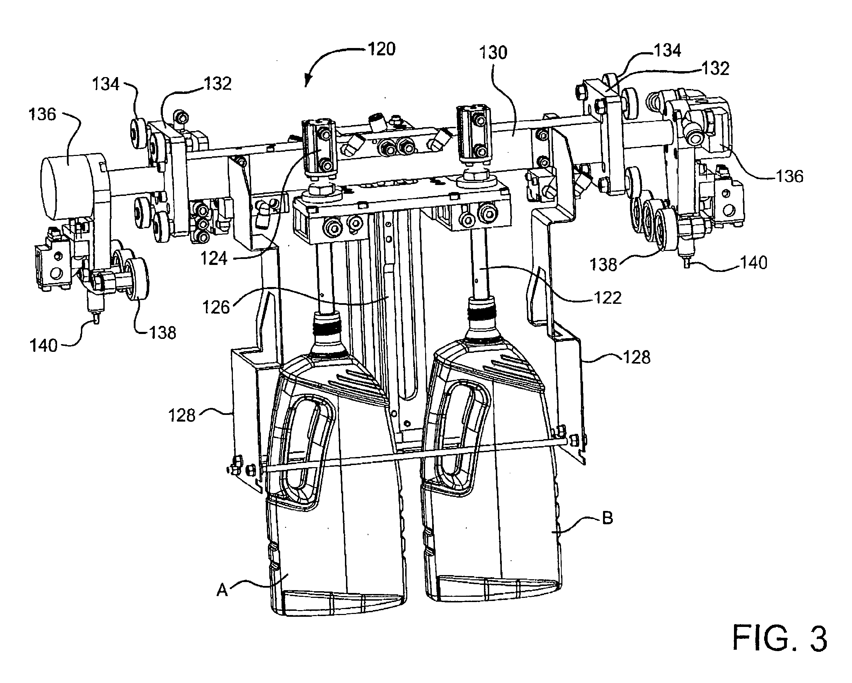

The assignee of the present application has been operating, in its plants for some time, a sophisticated bottle take-out system 100 in combination with its high-speed blow-molding machines. The bottle take-out system 100 is illustrated in Figs. 2 and 3. As shown in Fig. 2, the take-out system 100 has a generally rectangular shape formed by a steel frame 102. The frame 102 houses two, parallel, left and right sectioned chain tracks 104 and 106. The tracks 104, 106 may be made of extruded aluminum and are available from Spanco, Inc. of Morgantown, Pennsylvania under the registered trademark "ALU-TRACK." The two tracks 104, 106 are identical.

A single servo motor 108 drives a chain 110. Chain idler sprockets 112 are mounted to the frame 102. At least one chain tensioner 114 is also provided. The chain 110 is driven by the servo motor 108 with the idler sprockets 112 as well as the chain tensioners 114 to achieve a smooth indexing motion.

Fig. 3 illustrates the pick-up assembly 120 of the bottle take-out system 100. Once the bottles A and B have been blown and cooled, the bottles A, B are ready to be removed by the bottle take-out system 100. After the blow-molding machine indexes to its final position (with the mold closed, low clamp pressure, and the blow pin up), the fingers 122 enter the necks of the bottles A, B to lift the bottles A, B up. A lifting finger cylinder 124 moves the fingers 122 up and down and in to and out of engagement with the bottles A, B.

A main lifting cylinder 126 lifts the fingers 122 and bottles A, B up and away from the mold 1, allowing the bottles A, B to be carried by the fingers 122 along the track 106. A stabilizer plate 128 is provided to guide the bottles A, B. An air manifold 130 provides air to the cylinders 124, 126 to activate them. A separate rotary union supplies air to a two-port receiver. The two-port receiver is connected to channel air to the other side of the pick-up assembly 120 via channels through the air manifold 130.

Cam contact plates 132 are provided. Each cam contact plate 132 has four idler rollers 134. A three-point contact of the rollers 134 is assured with the track 104. There is always a single roller engaged. A pair of trackers 136 are also provided. Each tracker 136 has a roller bearing 138 and an elastomeric (e.g., rubber) projection 140. The roller bearings 138 run inside the track 106 and the projections 140 apply tension at all times and contact with the track 106.

The sequence of operation begins with the pick-up assembly 120. The mold 1 stops and the bottle-lifting station is waiting. The main lifting cylinder 126 is actuated and lowers the lifting fingers 122 into the necks of the bottles A, B. The lifting finger cylinders 124 are activated, swelling rings on the lifting fingers 122 which grip the necks of the bottles A, B. The mold 1 then opens and the chain 110 indexes, lifting both bottles A and B upward, and the main lifting cylinder 126 moves to its "up" position. The next index performs the same action with the next station.

The bottles A, B are carried along the track 106 by the chain 110 until they reach the unload or drop station. Once the bottles A, B reach the unload station, the lifting finger cylinders 124 are activated, relaxing the rings on the lifting fingers 122. The main lifting cylinder 126 is actuated and moves up, pulling the lifting fingers 122 out of the necks of the bottles A, B. The chain 110 then indexes to the next position. A stripper plate is actuated blocking the bottles A, B from following the lifting fingers 122 once the bottles A, B are released.

The bottle take-out system 100 has eight take-out stations positioned in a large, rectangular loop traveled by the chain 110. Four stations are disposed along the top and four are disposed along the bottom of each track 106. Each station removes two bottles A, B from the blow-molding machine at once. The system 100 is about two meters long and takes about 3.8 seconds to remove a bottle A and deposit the bottle A on a conveyor 26.

In view of the need for an even faster and more versatile takeout, which requires less floor space, the present invention further improves the take-out system 100. The improved takeout 200 has two take-out stations, is only 1 to 1.5 meters long, and is faster than the take-out system 100. Various embodiments of the improved takeout 200 and method of the present invention are described in detail below.

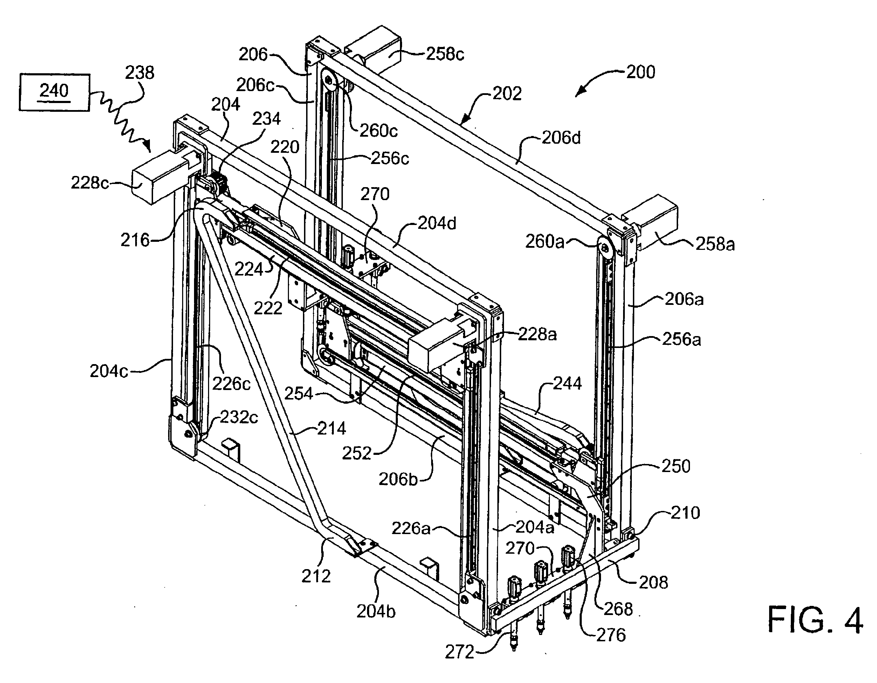

As shown in Fig. 4, the takeout 200 has a light-weight frame 202. The frame 202 has a first rectangular frame member 204 and a second rectangular frame member 206. The first frame member 204 has a front upright 204a, a base 204b, a rear upright 204c, and a top 204d. The first frame member 204 may be formed from four, separate components connected together, for example, by brackets and fasteners. Alternatively, the first frame member 204 may be an integral component. By "integral," is meant a single piece or a single unitary part that is complete by itself without additional pieces, i.e., the part is of one monolithic piece formed as a unit. The second frame member 206 is a mirror image of the first frame member 204 along the centerline 205. The first and second frame members 204, 206 are connected by a cross beam 208 affixed to the first and second frame members 204, 206 by suitable fasteners 210, as would be known to an artisan.

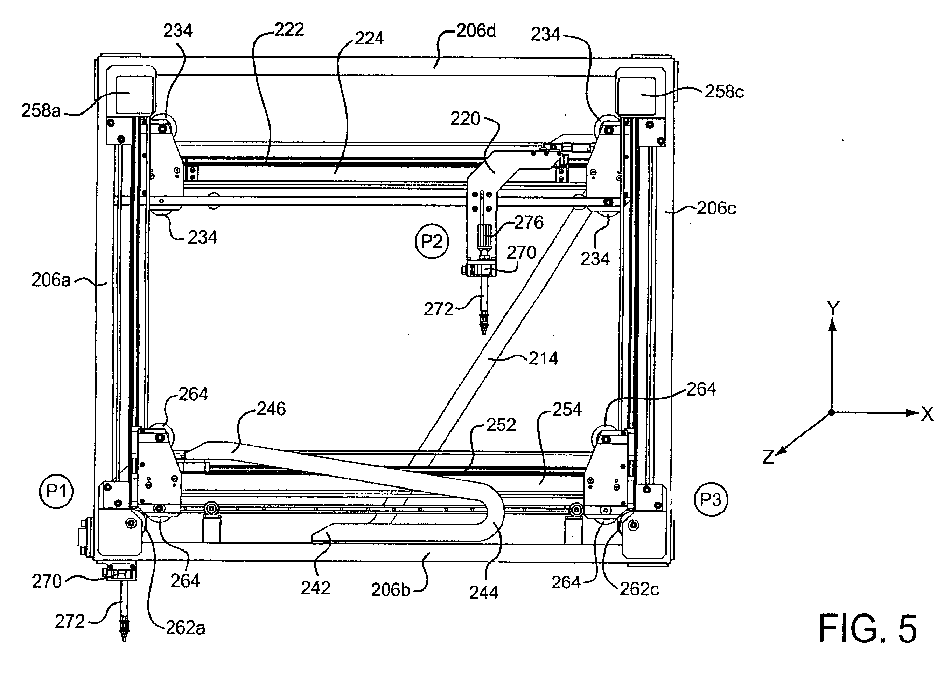

The foot 212 of a first flexible slide 214 is fixed (e.g., fastened) to the base 204b of the first frame member 204. The first flexible slide 214 is attached on its head 216 to a first arm 220. The first flexible slide 214 includes a belt 211, preferably made of plastic. The belt 211 performs a function like the chain 110 of the take-out system 100, and the chain 110 could be used in the takeout 200, but the belt 211 offers the advantages of smoother travel and less weight. If desired, the first flexible slide 214 can house electrical components, pneumatic components, or both types of components. The first flexible slide 214 moves in the x-y plane (see the coordinates shown in Fig. 5) without the need for any rotary connections.

With the first flexible slide 214 attached, the first arm 220 travels along a first track 222 of a first carriage 224 in the horizontal, back-and-forth, x-direction. The first carriage 224 travels in the vertical, up-and-down, y-direction along a pair of first guides 226a and 226c placed in the front upright 204a and rear upright 204c, respectively. The first carriage 224 carries four passive pulleys 234 that facilitate travel by the first arm 220 along the first track 222 in the first carriage 224.

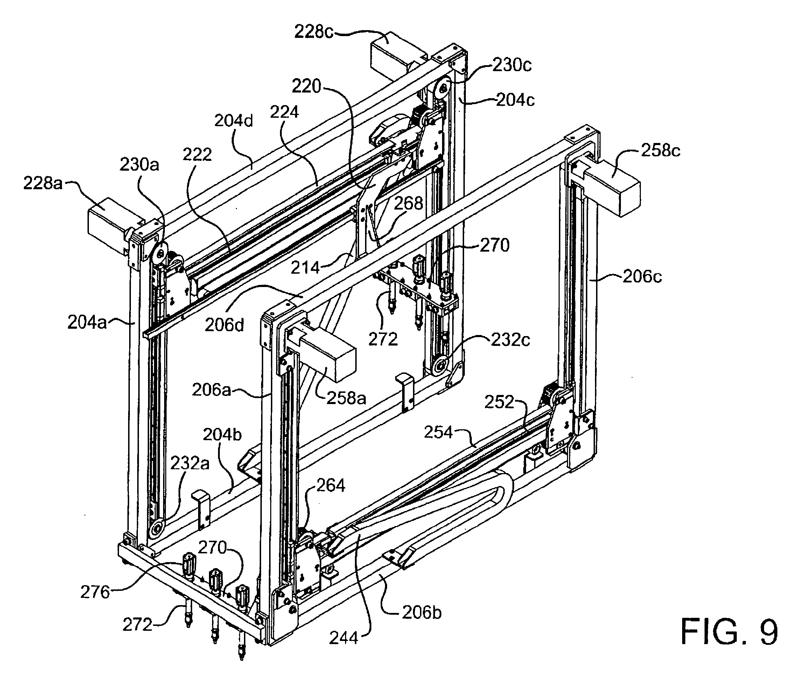

A pair of servo motors 228a and 228c are fixed to the first frame member 204 and located proximate the junctions between the front upright 204a and top 204d and between the rear upright 204c and top 204d, respectively. Each motor 228a, 228c independently drives the belt 211 through a respective drive sprocket 230a and 230c (see Fig. 9). A pair of passive pulleys 232a and 232c are fixed to the first frame member 204 and located proximate the junctions between the front upright 204a and base 204d and between the rear upright 204c and base 204d, respectively (see Fig. 9). The belt 211 runs between the drive sprocket 230a and the passive pulley 232a along the first guide 226a, and between the drive sprocket 230c and the passive pulley 232c along the first guide 226c.

As previously noted, the second frame member 206 is a mirror image of the first frame member 204 along the centerline 205. The second frame member 206 has a front upright 206a, a base 206b, a rear upright 206c, and a top 206d. The second frame member 206 may be formed from four, separate components connected together, for example, by brackets and fasteners. Alternatively, the second frame member 206 may be an integral component.

The foot 242 of a second flexible slide 244 is fixed (e.g., fastened) to the base 206b of the second frame member 206. The second flexible slide 244 is attached on its head 246 to a second arm 250. The second flexible slide 244 includes a belt 211. If desired, the second flexible slide 244 can house electrical components, pneumatic components, or both types of components. The second flexible slide 244 moves in the x-y plane (see the coordinates shown in Fig. 5) without the need for any rotary connections.

With the second flexible slide 244 attached, the second arm 250 travels along a second track 252 of a second carriage 254 in the horizontal, back-and-forth, x-direction. The second carriage 254 travels in the vertical, up-and-down, y-direction along a pair of second guides 256a and 256c placed in the front upright 206a and rear upright 206c, respectively. The second carriage 254 carries four passive pulleys 264 that facilitate travel by the second arm 250 along the second track 252 in the second carriage 254.

A pair of servo motors 258a and 258c are fixed to the second frame member 206 and located proximate the junctions between the front upright 206a and top 206d and between the rear upright 206c and top 206d, respectively. Each motor 258a, 258c independently drives the belt 211 through a respective drive sprocket 260a and 260c. A pair of passive pulleys 262a and 262c are fixed to the second frame member 206 and located proximate the junctions between the front upright 206a and base 206d and between the rear upright 206c and base 206d, respectively (see Fig. 5). The belt 211 runs between the drive sprocket 260a and the passive pulley 262a along the second guide 256a, and between the drive sprocket 260c and the passive pulley 262c along the second guide 256c.

The motors 228a, 228c fixed to the first frame member 204 and the motors 258a, 258c fixed to the second frame member 206 are each controlled by computer program code in a central processing unit (CPU) of a computer 240. The computer 240 sends signals 238 to each of the motors 228a, 228c, 258a, and 258c. The signals 238 can be sent either along physical connections or wirelessly, as would be understood by an artisan. The operator interacts with the computer 240 and, via the computer 240, directs the operation (e.g., on or off, direction of rotation, speed of rotation) of each of the motors 228a, 228c, 258a, and 258c independently. The programmable nature of the motors 228a, 228c, 258a, and 258c allows flexibility to accommodate various applications and bottle configurations.

Thus, the present invention can further be embodied in the form of computer-implemented processes and apparatus for practicing such processes, for example, and can be embodied in the form of computer program code embodied in tangible media, such as floppy diskettes, fixed (hard) drives, CD ROM's, magnetic tape, fixed/integrated circuit devices, or any other computer-readable storage medium, such that when the computer program code is loaded into and executed by the computer 240, the computer 240 becomes an apparatus for practicing the invention. The program may be embodied in a carrier where a carrier may be a diskette, CD-ROM or transmitted carrier wave.

Focusing on the motors 228a, 228c fixed to the first frame member 204, with the understanding that the motors 258a, 258c fixed to the second frame member 206 operate in a similar manner, the motors 228a, 228c may be directed to rotate in the same (e.g. clockwise) or in opposite directions. Therefore, the independent operation of the motors 228a, 228c permits four possibilities. (1) If the motors 228a, 228c rotate together in one direction, then the first carriage 224 is pulled vertically upward along the first guides 226a, 226c. (2) If the motors 228a, 228c rotate together in the opposite direction, then the first carriage 224 is pulled vertically downward along the first guides 226a, 226c. (3) If one motor 228a rotates in one direction (e.g., clockwise) while the other motor 228c rotates in the opposite direction (counter-clockwise), then the first arm 220 moves horizontally toward the front upright 204a along the first track 222 in the first carriage 224. (4) If the motor 228a rotates in different direction (e.g., counter-clockwise) while the other motor 228c rotates in the opposite direction (clockwise), then the first arm 220 moves horizontally toward the rear upright 204c along the first track 222 in the first carriage 224. The coordinated, independent operation of the motors 228a, 228c allows the operator to position the first arm 220 at any desired point in the entire x-y plane.

The travel of the first arm 220 begins in the initial position P1 of Fig. 5, which corresponds to the bottom front of the frame 202 (note, however, that the second arm 250 is shown in the initial position P1 in Fig. 5). The initial position P1 is where the lifting fingers 272 pick up one or more bottles A from the mold 1. The first arm 220 is then moved through a continuous series of predetermined intermediate positions P2 that together define a travel path, following the instructions of the computer 240. An example intermediate position P2 is shown in Fig. 5 (which is where the first arm 220 is actually located in Fig. 5). By "predetermined" is meant determined beforehand, so that the predetermined travel path must be determined, i.e., chosen or at least known, before the first arm 220 begins to move after having picked up the bottle A. The predetermined travel path may have any suitable shape, including a parabola, to accommodate considerations such as the size of the bottles A. A fast, short travel path might be suitable for smaller bottles A. The travel path is "closed" in that it forms one, continuous loop.

The travel of the first arm 220 ends in the terminal position P3 of Fig. 5, which corresponds to the bottom rear of the frame 202 (note, however, that neither the first arm 220 nor the second arm 250 is shown in the position P3 in Fig. 5). The terminal position P3 is where the lifting fingers 272 discharge the bottles A at their destination. The destination for the bottles A may be, for example, a chute (e.g., to go to a scrap conveyor and on to a grinder), a conveyor 26, or packaging (e.g., a box). Although a specific initial position P1 and terminal position P3 are illustrated in Fig. 5, the initial and terminal positions P1, P3 may be located as desired (e.g., the initial position P1 might be located nearer the top of the frame 202 or in a plane different from the terminal position P3). Thus, the terminal position P3 for the first arm 220 might be the conveyor 26 while the terminal position P3 for the second arm 250 might be a chute.

After discharging the bottles A at the terminal position P3, the first arm 220 then returns (empty, i.e., without carrying any bottles A) to the initial position P1. Of course, the second arm 250 traverses its own predetermined travel path simultaneously as the first arm 220 completes its travel path. The travel path for the first arm 220 may be the same as or entirely different from the travel path for the second arm 250, and the first arm 220 may traverse its travel path faster or slower than the second arm 250 traverses its travel path. Typically, although not necessarily, the first arm 220 is located at the initial position P1 while the second arm 250 is located at the terminal position P3. All that is required, however, is that the two arms 220, 250 be out of phase so that collisions are avoided (i.e., the second arm 250 is never located at the same position occupied by the first arm 220).

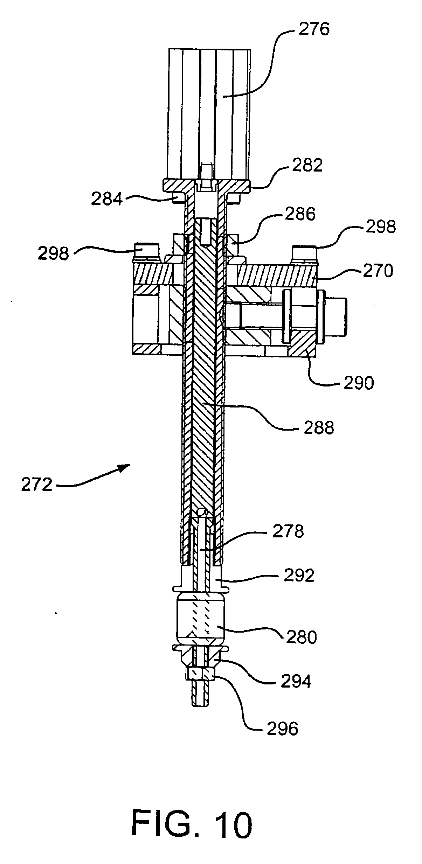

Fig. 10 is a view, in partial cross section, of a lifting finger 272 of the takeout 200 according to an embodiment of the present invention. The lifting finger 272 is carried by a leg 270. A leg 270 is attached to each of the first arm 220 and the second arm 250. A flange 268 is disposed between each arm 220, 250 and its respective leg 270 to enhance and strengthen the attachment. The number of lifting fingers 272 is predetermined by the number of bottles A that must be carried by the respective arm 220, 250. Three lifting fingers 272 are illustrated; one, two, or even more than three lifting fingers 272 may be carried by the leg 270.

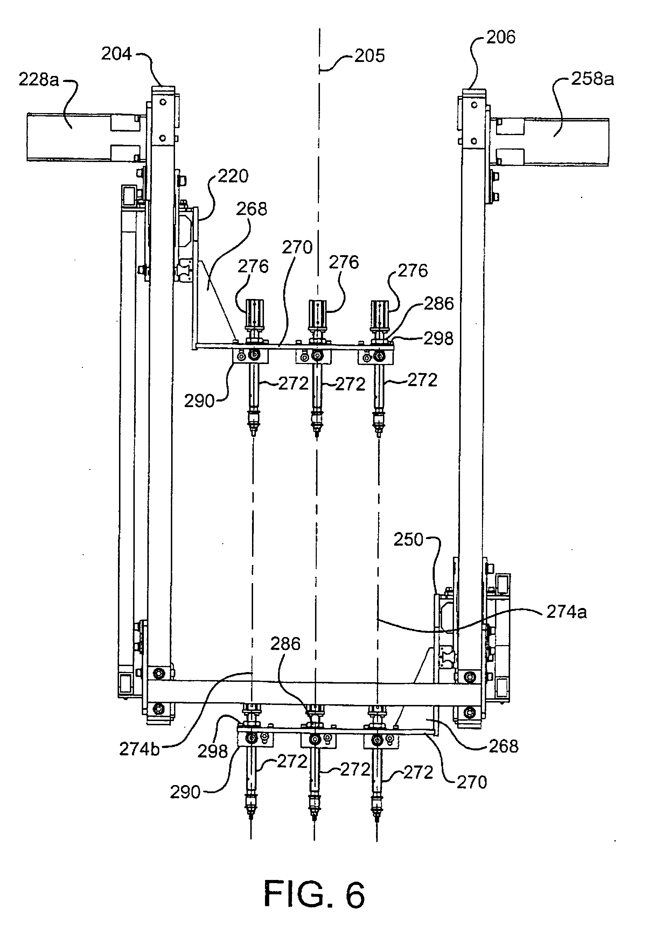

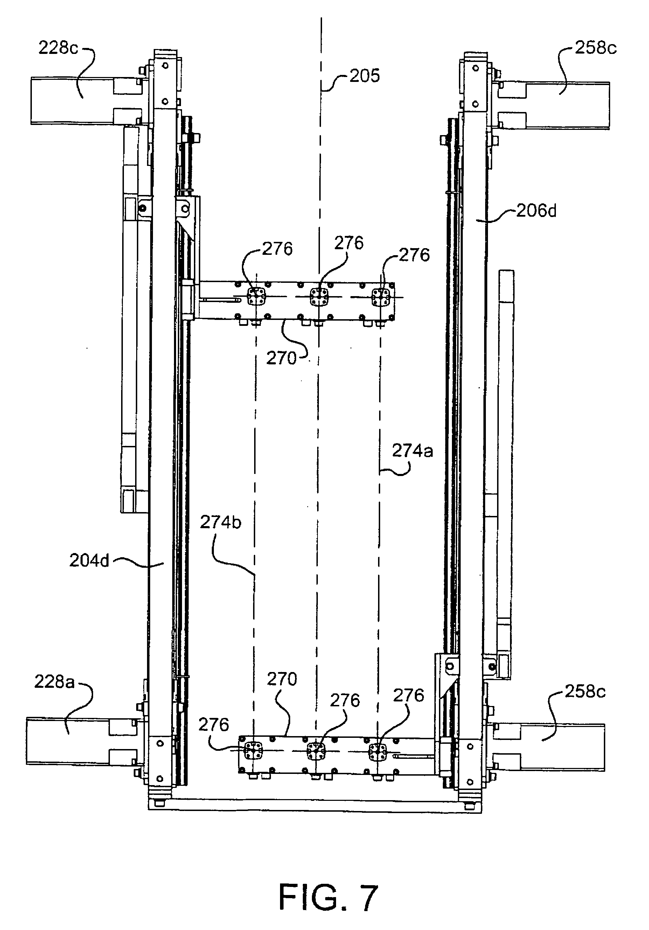

The three lifting fingers 272 carried by the leg 270 attached to the first arm 220 may be (but are not necessarily) aligned in the same vertical planes (all three planes are parallel with the first frame member 204 and with the second frame member 206) with the three lifting fingers 272 carried by the leg 270 attached to the second arm 250-as illustrated in Figs. 6 and 7. If so, the central lifting fingers 272 may be aligned along the vertical plane through the centerline 205 with the lifting fingers 272 on either side of the central lifting finger 272 aligned along the planes 274a and 274b, respectively.

Each of the lifting fingers 272 has a lifting finger cylinder 276. The lifting finger 272 enters the neck of the bottle A to lift the bottle A up. The lifting finger cylinder 276 moves the lifting finger 272 up and down and in to and out of engagement with the bottle A. Thus, when the lifting finger 272 is to engage the bottle A at the initial position P1, the first arm 220 or the second arm 250 (as the case may be) lowers the lifting finger 272 into the neck of the bottle A. The lifting finger cylinder 276 is activated to expand a flexible, elastomeric ring 280 (e.g., a rubber Leopold ring) against the inside surface of the bottle A. The ring 280 applies sufficient pressure to clamp or hold and to carry the bottle A without applying an undesirable amount of pressure as might risk damage to the bottle A. As the ring 280 expands, it can correct for minor offset or misalignment between the bottle A and the lifting finger 272.

Thus clamped by the lifting finger 272, the bottle A is carried by the first arm 220 or the second arm 250 along the predetermined path of the first arm 220 or the second arm 250 (as the case may be) until the bottle A reaches the terminal position P3. At the terminal position P3, the lifting finger cylinder 276 is again activated, relaxing the ring 280 on the lifting finger 272. The first arm 220 or the second arm 250 (as the case may be) raises the lifting finger 272 out of the neck of the bottle A and discharges the bottle A. The computer 240 controls the operation of the lifting finger cylinder 276.

The lifting finger 272 may have an internal channel 278, used to evacuate hot air from inside the bottle A, and an inner pin 288. The lifting finger cylinder 276 is affixed to a flange 282 of the lifting finger 272 using suitable fasteners, as would be known to an artisan, such as screws 284. The lifting finger 272 is attached to the associated leg 270 by suitable fasteners, such as a nut and washer combination 286. An adjustment housing 290 is provided proximate each lifting finger 272 to permit adjustment and facilitate operation of the lifting finger 272. The adjustment housing 290 is attached to the associated leg 270 by suitable fasteners, such as a screw and washer combination 298.

The flexible rings 280 are retained on the lifting fingers 272 by the combination of an upper holder 292 and a lower holder 294. A nut 296 is disposed under the lower holder 294 to complete the assembly. The flexible rings 280 may prevent damage to the lifting fingers 272 should the lifting fingers 272 encounter interference. The lifting fingers 272 may be constructed and arranged to break away at a force low enough to prevent damage to the associated leg 270 and arm 220, 250 in such a situation.

The apparatus and method of the present invention offer a number of advantages. Among those advantages is speed. The takeout 200 extracts bottles A from an indexing blow-molding machine running at a high rate of speed. The takeout 200 completes the tasks of enraging and clamping the bottle A, and extracting and clearing the bottle A from the mold 1, before the mold 1 indexes from the take-out station to its next station. Although the upper limit of the speed capability of the takeout 200 is unknown, tests have shown that speed is not a limiting factor to operation of the takeout 200. Certainly, the takeout 200 improves upon the speed achieved with conventional take-out mechanisms. The takeout 200 is capable, for example, of removing a set of bottles A from a mold 1 faster than every two seconds. Another advantage is flexibility. The operator can program changes for different bottles and applications without implementing any mechanical changes. Still another advantage is cost reduction relative to conventional take-out systems, the result of a reduced number of components and lighter weight assembly all with a smaller footprint.

In operation, the takeout 200 can be used as follows. The method of use begins by providing the takeout 200. Next, the various components (e.g., the motors 228a, 228c, 258a, and 258c and lifting finger cylinders 276) of the takeout 200 are programmed using the computer 240. The first arm 220 with its attached leg 270 and lifting fingers 272 is moved to the initial position P1. The lifting finger cylinder 276 for the lifting fingers 272 of the first arm 220 is activated to prompt the lifting fingers 272 to pick up bottles A. The first arm 220 then carries the bottles A through the intermediate positions P2 and to the terminal position P3. Simultaneously, the second arm 250 moves toward the initial position P1. The lifting finger cylinder 276 for the lifting fingers 272 of the first arm 220 is activated to prompt the lifting fingers 272 to discharge the bottles A from the first arm 220 at the terminal position P3. The lifting finger cylinder 276 for the lifting fingers 272 of the second arm 250 is activated to prompt the lifting fingers 272 to pick up bottles A at the initial position P1 (either just before, simultaneous with, or just after the first arm 220 discharges bottles A at the terminal position P3). The first arm 220 then moves toward the initial position P1 to pick up the next set of bottles A, while the second arm 250 begins its predetermined path carrying bottles A through the intermediate positions P2 to the terminal position P3, where the lifting finger cylinder 276 for the lifting fingers 272 of the second arm 250 is activated to prompt the lifting fingers 272 to discharge the bottles A from the second arm 220. The first and second arms 220, 250 repeatedly traverse their respective, predetermined, closed, endless paths as often as desired for the particular application.

Although illustrated and described above with reference to certain specific embodiments and examples, the present invention is nevertheless not intended to be limited to the details shown. Rather, various modifications may be made in the details within the scope and range of equivalents of the claims It is expressly intended, for example, that all ranges broadly recited in this document include within their scope all narrower ranges which fall within the broader ranges.

## Claims

1. A takeout (200) for transferring products (A, B) from the mold (2a, 2b) of a blow-molding machine (1) to a discharge position (P3), the takeout having a first arm (220), at least one lifting finger (272) carried by the first arm (220) and holding, carrying, and releasing a product (A, B), and wherein the first arm (220) and the at least one lifting finger (272) move along a first, predetermined, closed, endless path including a mold position (P1), a series of intermediate positions (P2), and a discharge position (P3), the takeout (200) **characterized by**:
a first frame member (204) having a pair of first guides (226a and 226c) and defining a first plane with a horizontal direction and a vertical direction;
a first flexible slide (214) having a foot (212) connected to the first frame member (204) and a head (216) connected to the first arm (220);
at least one first motor (228a, 228c) affixed to the first frame member (204);
a first belt (211) associated with the first frame member (204), driven by the at least one first motor (228a, 228c), and carrying the first arm (220); and
a first carriage (224) having a first track (222) along which the first arm (220) travels in the horizontal direction, the first carriage (224) traveling along the pair of first guides (226a and 226c) of the first frame member (204) in the vertical direction.

2. The takeout (200) according to claim 1, further comprising:
a second frame member (206) being connected to the first frame member (204), having a pair of second guides (256a and 256c), and defining a second plane with the horizontal direction and the vertical direction;
a second flexible slide (244) having a foot (242) connected to the second frame member (206) and a head (246) connected to a second arm (250);
at least one second motor (258a, 258c) affixed to the second frame member (206);
a second belt (211) associated with the second frame member (206), driven by the at least one second motor (258a, 258c), and carrying the second arm (250);
a second carriage (254) having a second track (252) along which the second arm (250) travels in the horizontal direction, the second carriage (254) traveling along the pair of second guides (256a and 256c) of the second frame member (206) in the vertical direction; and
at least one lifting finger (272) carried by the second arm (250), the at least one lifting finger (272) holding, carrying, and releasing a product (A, B),
wherein the second arm (250) and the at least one lifting finger (272) move along a second, predetermined, closed, endless path including a mold position (P1), a series of intermediate positions (P2), and a discharge position (P3);
preferably
the first path and the second path are identical but travel of the first arm (220) along the first path is out of phase with travel of the second arm (250) along the second path.

3. The takeout (200) according to claim 1, wherein the first frame member (204) has a generally rectangular shape.

4. The takeout (200) according to claim 1, wherein the first flexible slide (214) moves in the first plane defined by the first frame member (204) to locate the first arm (220) at any point in the first plane.

5. The takeout (200) according to claim 1, wherein the first carriage (224) has pulleys (234) to facilitate travel by the first arm (220) along the first track (222).

6. The takeout (200) according to claim 1, further comprising a pair of first motors (228a, 228c) affixed to the first frame member (204), the motors (228a, 228c) operating independently to drive the belt (211) in different directions;
preferably
each of the pair of first motors (228a, 228c) rotates in the same direction or in opposite directions.

7. The takeout (200) according to claim 1, further comprising a computer (240) controlling one or more of the on-off status, the direction of rotation, and the speed of rotation of the at least one motor (228a, 228c).

8. The takeout (200) according to claim 1, wherein the at least one lifting finger (272) has a flexible, elastomeric ring (280) that expands to engage the product (A, B) and retracts to release the product (A, B);
preferably
further comprising a computer (240) controlling the at least one lifting finger (272).

9. The takeout (200) according to claim 1, further comprising:
a second frame member (206) being connected to the first frame member (204), having a pair of second guides (256a, 256c), and defining a second plane parallel to the first plane;
a second flexible slide (244) having a foot (242) connected to the second frame member (206) and a head (246) connected to a second arm (250);
a pair of first motors (228a, 228c) affixed to the first frame member (204), each of the pair of first motors (228a, 228c) rotating independently in the same direction or in opposite directions;
a pair of second motors (258a, 258c) affixed to the second frame member (206), each of the pair of second motors (258a, 258c) rotating independently in the same direction or in opposite directions;
a second belt (211) associated with the second frame member (206), driven by the independent operation of each of the pair of second motors (258a, 258c), and carrying the second arm (250);
a second carriage (254) having a second track (252) along which the second arm (250) travels in the horizontal direction, the second carriage (254) traveling along the pair of second guides (256a, 256c) of the second frame member (206) in the vertical direction; and
at least one second lifting finger (272) carried by the second arm (250), the at least one second lifting finger (272) holding, carrying, and releasing a product (A, B),
wherein the second arm (250) and the at least one second lifting finger (272) move along a second, predetermined, closed, endless path including the mold position (P1), a series of second intermediate positions (P2), and a second discharge position (P3).

10. The takeout (200) according to claim 9, wherein the first path and the second path are identical but travel of the first arm (220) along the first path is out of phase with travel of the second arm (250) along the second path.

11. The takeout (200) according to claim 9, wherein the first frame member (204) has a generally rectangular shape and the second frame member (206) is a mirror image of the first frame member (204).

12. The takeout (200) according to claim 9, wherein the first flexible slide (214) moves in the first plane defined by the first frame member (204) to locate the first arm (220) at any point in the first plane and the second flexible slide (244) moves in the second plane defined by the second frame member (206) to locate the second arm (250) at any point in the second plane.

13. The takeout (200) according to claim 9, further comprising a computer (240) controlling independently one or more of the on-off status, the direction of rotation, and the speed of rotation of each of the motors (228a, 228c, 258a, 258c).

14. The takeout (200) according to claim 9, wherein each of the lifting fingers (272) has a flexible, elastomeric ring (280) that expands to engage the product (A, B) and retracts to release the product (A, B);
preferably
further comprising a computer (240) controlling independently each of the lifting fingers (272).

15. The takeout (200) according to claim 9, further comprising:
the first frame member (204) having a generally rectangular shape;
the second frame member (206) having a generally rectangular shape;
the first flexible slide (214) moving in the first plane defined by the first frame member (204) to locate the first arm (220) at any point in the first plane;
the second flexible slide (244) moving in the second plane defined by the second frame member (206) to locate the second arm (250) at any point in the second plane;
the first belt (211) associated with the first frame member (204) being driven by the independent operation of each of the pair of first motors (228a, 228c);
the second belt (211) associated with the second frame member (206) being driven by the independent operation of each of the pair of second motors (258a, 258c); and
a computer (240) controlling independently one or more of the on-off status, the direction of rotation, and the speed of rotation of each of the motors (228a, 228c, 258a, 258c) and controlling independently each of the lifting fingers (272);
preferably
the first path and the second path are identical but travel of the first arm (220) along the first path is out of phase with travel of the second arm (250) along the second path.

## Patentansprüche

1. Entnahmevorrichtung (200) zum Entnehmen von Erzeugnissen (A, B) aus einer Form (2a, 2b) einer Blasformmaschine (1) zu einer Austragposition (P3), wobei die Entnahmevorrichtung einen ersten Arm (220) aufweist, zumindest einen Anhebefinger (272), der durch den ersten Arm (220) getragen ist und ein Erzeugnis (A, B) hält, trägt und frei gibt und wobei der erste Arm (220) und der zumindest eine Anhebefinger (272) sich entlang einem ersten vorbestimmten, geschlossenen Endlospfad bewegen, der eine Formposition (P1), eine Reihe von Zwischenpositionen (P2), und die Entladeposition (P3) enthält, wobei die Entnahmevorrichtung **gekennzeichnet ist durch**:
ein erstes Rahmenelement (204), das ein Paar erster Führungen (226a und 226c) aufweist und eine erste Ebene mit einer horizontalen und einer vertikalen Richtung festlegt;
eine erste flexible Gleitbahn (214), die einen Fuß (212) aufweist, der mit dem ersten Rahmenelement (204) verbunden ist, und einen Kopf (216), der mit dem ersten Arm (220) verbunden ist;
zumindest einen ersten Motor (228a, 228c), der an dem ersten Rahmenelement (204) festgelegt ist;
einen dem ersten Rahmenelement (204) zugeordneten ersten Riemen (211), der durch den zumindest einen ersten Motor (228a, 228c) angetrieben ist und den ersten Arm (220) trägt; und
einen ersten Schlitten (224), der eine erste Laufbahn (222) aufweist, entlang welcher der erste Arm (220) sich in der horizontalen Richtung bewegt, wobei der erste Schlitten (224) sich entlang dem Paar erster Führungen (226a und 226c) des ersten Rahmenelements (204) in der vertikalen Richtung bewegt.

2. Entnahmevorrichtung (200) nach Anspruch 1, außerdem aufweisend:
ein zweites erstes Rahmenelement (206), das mit dem ersten Rahmenelement (204) verbunden ist und ein Paar zweiter Führungen (256a und 256c) aufweist und eine zweite Ebene mit einer horizontalen und einer vertikalen Richtung festlegt;
eine zweite flexible Gleitbahn (244), die einen Fuß (242) aufweist, der mit dem zweiten Rahmenelement (206) verbunden ist, und einen Kopf (246), der mit dem zweiten Arm (250) verbunden ist;
zumindest einen zweiten Motor (258a, 258c), der an dem zweiten Rahmenelement (206) festgelegt ist;
einen dem zweiten Rahmenelement (206) zugeordneten zweiten Riemen (211), der durch den zumindest einen zweiten Motor (258a, 258c) angetrieben ist und den zweiten Arm (250) trägt; und
einen zweiten Schlitten (254), der eine zweite Laufbahn (252) aufweist, entlang welcher der zweite Arm (250) sich in der horizontalen Richtung bewegt, wobei der zweite Schlitten (254) sich entlang dem Paar zweiter Führungen (256a und 256c) des zweiten Rahmenelements (206) in der vertikalen Richtung bewegt, und
zumindest einen Anhebefinger (272), der durch den zweiten Arm (250) getragen ist, wobei der zumindest eine Anhebefinger (272) das Erzeugnis (A, B) hält, trägt und frei gibt,
wobei der zweite Arm (250) und der zumindest eine Anhebefinger (272) sich entlang einem zweiten vorbestimmten, geschlossenen Endlospfad bewegen, der eine Formposition (P1) enthält, eine Reihe von Zwischenpositionen (P2), und die Entladeposition (P3);
wobei bevorzugt
der erste Pfad und der zweite Pfad identisch sind, wohingegen die Bewegung des ersten Arms (220) entlang dem ersten Pfad außer Phase mit der Bewegung des zweiten Arms (250) entlang des zweiten Pfads ist.

3. Entnahmevorrichtung (200) nach Anspruch 1, wobei das erste Rahmenelement (204) eine allgemein rechteckige Gestalt ausweist.

4. Entnahmevorrichtung (200) nach Anspruch 1, wobei die erste flexible Gleitbahn (214) sich in der durch das erste Rahmenelement (204) festgelegten ersten Ebene bewegt, um den ersten Arm (220) in einem beliebigen Punkt in der ersten Ebene anzuordnen.

5. Entnahmevorrichtung (200) nach Anspruch 1, wobei der erste Schlitten (224) Rollen (234) zur Erleichterung der Bewegung durch den ersten Arm (220) entlang der ersten Laufbahn (222) aufweist.

6. Entnahmevorrichtung (200) nach Anspruch 1, außerdem aufweisend ein Paar erster Motoren (228a, 228c), die am ersten Rahmenelement (204) festgelegt sind, wobei die Motoren (228a, 228c) zum Antreiben des Riemens (211) in unterschiedlichen Richtungen unabhängig arbeiten;
wobei bevorzugt
jeder des Paars erster Motoren (228a, 228c) sich in derselben Richtung oder in entgegengesetzten Richtungen dreht.

7. Entnahmevorrichtung (200) nach Anspruch 1, außerdem aufweisend einen Computer (240) zum Steuern von einem oder mehreren der Ein-/Ausschaltzustände, der Drehrichtung und der Drehzahl von dem zumindest einem Motor (228a, 228c).

8. Entnahmevorrichtung (200) nach Anspruch 1, wobei der zumindest eine Anhebefinger (272) einen flexiblen Elastomerring (280) aufweist, der sich zum Eingriff mit dem Erzeugnis (A, B) ausdehnt und der sich zur Freigabe des Erzeugnisses (A, B) zusammenzieht;
wobei bevorzugt
ein Computer (240) zum Steuern des zumindest einen Anhebefingers (272) vorgesehen ist.

9. Entnahmevorrichtung (200) nach Anspruch 1, außerdem aufweisend:
ein mit dem ersten Rahmenelement (204) verbundenes zweites Rahmenelement (206), das ein Paar zweiter Führungen (256a, 256c) aufweist und eine zweite Ebene parallel zur ersten Ebene festlegt;
eine zweite flexible Laufbahn (244), die einen Fuß (242) aufweist, der mit dem zweiten Rahmenelement (206) verbunden ist, und einen zweiten Kopf (246), der mit dem zweiten Arm (250 verbunden ist);
ein Paar erster Motoren (228a, 228c) die am ersten Rahmenelement (204) festgelegt sind, wobei jeder des Paars erster Motoren (228a, 228c) sich unabhängig in derselben Richtung oder in entgegengesetzten Richtungen dreht;
ein Paar zweiter Motoren (258a, 258c) die am zweiten Rahmenelement (206) festgelegt sind, wobei jeder des Paars erster Motoren (258a, 258c) sich unabhängig in derselben Richtung oder in entgegengesetzten Richtungen dreht;
einen mit dem zweiten Rahmenelement verbundenen zweiten Riemen (211), der durch die unabhängige Arbeitsweise von jedem des Paars zweiter Motoren (258a, 258c) angetrieben ist und den zweiten Arm (250) trägt;
einen zweiten Schlitten (254), der eine zweite Laufbahn (252) aufweist, entlang welcher der zweite Arm (250) sich in der horizontalen Richtung bewegt, wobei der zweite Schlitten (254) sich entlang dem Paar zweiter Führungen (256a und 256c) des zweiten Rahmenelements (206) in der vertikalen Richtung bewegt; und
zumindest einen zweiten Anhebefinger (272), der durch den zweiten Arm (250) getragen ist, wobei der zumindest eine zweite Anhebefinger (272) ein Erzeugnis (A, B) hält, trägt und frei gibt,
wobei der zweite Arm (250) und der zumindest eine zweite Anhebefinger (272) sich entlang einem zweiten vorbestimmten, geschlossenen Endlospfad bewegen, der eine Formposition (P1) enthält, eine Reihe von Zwischenpositionen (P2), und die Entladeposition (P3.

10. Entnahmevorrichtung (200) nach Anspruch 9, wobei der erste Pfad und der zweite Pfad identisch sind, wohingegen die Bewegung des ersten Arms (220) entlang dem ersten Pfad außer Phase mit der Bewegung des zweiten Arms (250) entlang des zweiten Pfads ist.

11. Entnahmevorrichtung (200) nach Anspruch 9, wobei das erste Rahmenelement (204) allgemein rechteckige Gestalt aufweist und das zweite Rahmenelement (206) ein Spiegelbild des ersten Rahmenelements (204) ist.

12. Entnahmevorrichtung (200) nach Anspruch 9, wobei die erste flexible Gleitbahn (214) sich in der durch das erste Rahmenelement (204) festgelegten ersten Ebene bewegt, um den ersten Arm (220) in einem beliebigen Punkt in der ersten Ebene anzuordnen, und wobei die zweite flexible Gleitbahn (244) sich in der durch das zweite Rahmenelement (206) festgelegten zweiten Ebene bewegt, um den zweiten Arm (250) in einem beliebigen Punkt in der zweiten Ebene anzuordnen.

13. Entnahmevorrichtung (200) nach Anspruch 9, außerdem aufweisend einen Computer (240) zum unabhängigen Steuern von einem oder mehreren der Ein-/Ausschaltzustände, der Drehrichtung und der Drehzahl von jedem der Motoren (228a, 228c, 258a, 258c).

14. Entnahmevorrichtung (200) nach Anspruch 9, wobei jeder der Anhebefinger (272) einen flexiblen Elastomerring (280) aufweist, der sich zum Eingriff mit dem Erzeugnis (A, B) ausdehnt und sich zur Freigabe des Erzeugnisses (A, B) zusammenzieht;
wobei bevorzugt
ein Computer (240) zum unabhängigen Steuern von jedem der Anhebefinger (272) vorgesehen ist.

15. Entnahmevorrichtung (200) nach Anspruch 9, wobei:
das erste Rahmenelement (204) allgemein rechteckige Gestalt aufweist,
das zweite Rahmenelement (206) allgemein rechteckige Gestalt aufweist,
die erste flexible Laufbahn (214) sich in der ersten Ebene bewegt, die durch das erste Rahmenelement (204) festgelegt ist, um den ersten Arm (220) in jedem Punkt in der ersten Ebene zu positionieren;
die zweite flexible Laufbahn (244) sich in der zweiten Ebene bewegt, die durch das zweite Rahmenelement (206) festgelegt ist, um den zweiten Arm (250) in jedem Punkt in der zweiten Ebene zu positionieren;
der mit dem ersten Rahmenelement (204) verbundene erste Riemen (211) durch die unabhängige Arbeitsweise von jedem des Paars erster Motoren (228a, 228c) angetrieben ist;
der mit dem zweiten Rahmenelement (206) verbundene zweite Riemen (211) durch die unabhängige Arbeitsweise von jedem des Paars zweiter Motoren (258a, 258c) angetrieben ist;
wobei ein Computer (240) zum unabhängigen Steuern von einem oder mehreren der Ein-/Ausschaltzustände, der Drehrichtung und der Drehzahl von jedem der Motoren (228a, 228c (228a, 228c, 258a, 258c) und zum unabhängigen Steuern von jedem der Anhebefinger (272) vorgesehen ist;
wobei bevorzugt
der erste Pfad und der zweite Pfad identisch sind, wohingegen die Bewegung des ersten Arms (220) entlang dem ersten Pfad außer Phase mit der Bewegung des zweiten Arms (250) entlang des zweiten Pfads ist.

## Revendications

1. Un extracteur (200) pour le transfert de produits (A, B) du moule (2a, 2b) d'une machine de moulage par soufflage (1) vers une position de déchargement (P3), cet extracteur comportant un premier bras (220), au moins un doigt de levage (272) soutenu par le premier bras (220) et qui maintient, porte et libère un produit (A, B), et dans lequel le premier bras (220) et au moins un doigt de levage (272) se déplacent le long d'un premier trajet prédéterminé, fermé, sans fin, qui inclut une position de moule (P1), une série de positions intermédiaires (P2), et une position de déchargement (P3), l'extracteur (200) étant **caractérisé par** :
un premier élément de bâti (204) comportant une paire de premiers guides (226a et 226c) et définissant un premier plan avec une direction horizontale et une direction verticale;
une première coulisse flexible (214) comportant un pied (212) raccordé au premier élément de bâti (204) et une tête (216) raccordée au premier bras (220) ;
au moins un premier moteur (228a, 228c) fixé sur le premier élément de bâti (204) ;
une première courroie (211) associée au premier élément de bâti (204), entraînée par au moins un premier moteur (228a, 228c), et portant le premier bras (220) ; et
un premier chariot (224) comportant une première piste (222) le long de laquelle le premier bras (220) se déplace dans la direction horizontale, le premier chariot (224) se déplaçant le long de la paire de premiers guides (226a et 226c) du premier élément de bâti (204) dans la direction verticale.

2. L'extracteur (200) selon la revendication 1, comprenant par ailleurs :
un second élément de bâti (206) qui est raccordé au premier élément de bâti (204), comportant une paire de seconds guides (256a et 256c), et définissant un second plan avec la direction horizontale et la direction verticale ;
une deuxième coulisse flexible (244) comportant un pied (242) raccordé au second élément de bâti (206) et une tête (246) raccordée à un second bras (250) ;
au moins un second moteur (258a, 258c) fixé sur le second élément de bâti (206) ;
une seconde courroie (211) associée au second élément de bâti (206), entraînée par au moins un second moteur (258a, 258c), et portant le second bras (250) ;
un second chariot (254) comportant une seconde piste (252) le long de laquelle le second bras (250) se déplace dans la direction horizontale, le second chariot (254) se déplaçant le long de la paire de seconds guides (256a et 256c) du second élément de bâti (206) dans la direction verticale ; et
au moins un doigt de levage (272) porté par le second bras (250), au moins un doigt de levage (272) qui maintient, porte et libère un produit (A, B),
dans lequel le second bras (250) au moins un doigt de levage (272) se déplace le long d'un second trajet prédéterminé, fermé, sans fin, qui inclut une position de moule (P1), une série de positions intermédiaires (P2), et une position de déchargement (P3) ;
de préférence
le premier trajet et le second trajet sont identiques, mais le déplacement du premier bras (220) le long du premier trajet est déphasé par rapport au déplacement du second bras (250) le long du second trajet.

3. L'extracteur (200) selon la revendication 1, dans lequel le premier élément de bâti (204) a une forme généralement rectangulaire.

4. L'extracteur (200) selon la revendication 1, dans lequel la première coulisse flexible (214) se déplace sur le premier plan défini par le premier élément de bâti (204) pour placer le premier bras (220) sur n'importe quel point du premier plan.

5. L'extracteur (200) selon la revendication 1, dans lequel le premier chariot (224) comporte des poulies (234) qui facilitent le déplacement du premier bras (220) le long de la première piste (222).

6. L'extracteur (200) selon la revendication 1, comprenant également une paire de premiers moteurs (228a, 228c) fixée sur le premier élément de bâti (204), les moteurs (228a, 228c) fonctionnant indépendamment pour entraîner la courroie (211) dans différentes directions ;
de préférence
chacune de la paire de premiers moteurs (228a, 228c) tourne dans le même sens ou dans des sens opposés.

7. L'extracteur (200) selon la revendication 1, comprenant également un ordinateur (240) commandant un ou plusieurs états d'arrêt/marche, le sens de rotation, et la vitesse de rotation d'au moins un moteur (228a, 228c).

8. L'extracteur (200) selon la revendication 1, dans lequel au moins un doigt de levage (272) comporte une bague élastomérique souple (280) qui se dilate pour entrer en prise avec le produit (A, B) et se rétracte pour libérer le produit (A, B) ;
de préférence
comprenant également un ordinateur (240) commandant au moins un doigt de levage (272).

9. L'extracteur (200) selon la revendication 1, comprenant également :
un second élément de bâti (206) qui est raccordé au premier élément de bâti (204), comportant une paire de seconds guides (256a, 256c), et définissant un second plan parallèlement au premier plan ;
une deuxième coulisse flexible (244) comportant un pied (242) raccordé au second élément de bâti (206) et une tête (246) raccordée à un second bras (250) ;
une paire de premier moteurs (228a, 228c) fixée sur le premier élément de bâti (204), chaque moteur de la paire de premiers moteurs (228a, 228c) tournant indépendamment dans le même sens ou dans des sens opposés ;
une paire de seconds moteurs (258a, 258c) fixés sur le second élément de bâti (206), chaque moteur de la paire des seconds moteurs (258a, 258c) tournant indépendamment dans le même sens ou dans des sens opposés ;
une seconde courroie (211) associée au second élément de bâti (206), entraînée par le fonctionnement indépendant de chaque moteur de la paire des seconds moteurs (258a, 258c), et portant le second bras (250) ;
un second chariot (254) comportant une seconde piste (252) le long de laquelle le second bras (250) se déplace dans la direction horizontale, le second chariot (254) se déplaçant le long de la paire de seconds guides (256a, 256c) du second élément de bâti (206) dans la direction verticale ; et
au moins un second doigt de levage (272) porté par le second bras (250), au moins un second doigt de levage (272) qui maintient, porte et libère un produit (A, B),
dans lequel le second bras (250) et au moins un second doigt de levage (272) se déplacent le long d'un second trajet prédéterminé, fermé, sans fin, qui inclut la position du moule (P1), une série de secondes positions intermédiaires (P2), et une seconde position de déchargement (P3).

10. L'extracteur (200) selon la revendication 9, dans lequel le premier trajet et le second trajet sont identiques, mais le déplacement du premier bras (220) le long du premier trajet est déphasé par rapport au déplacement du second bras (250) le long du second trajet.

11. L'extracteur (200) selon la revendication 9, dans lequel le premier élément de bâti (204) a une forme généralement rectangulaire et le second élément de bâti (206) est une image miroir du premier élément de bâti (204).

12. L'extracteur (200) selon la revendication 9, dans lequel la première coulisse flexible (214) se déplace sur le premier plan défini par le premier élément de bâti (204) pour placer le premier bras (220) sur n'importe quel point du premier plan, et la seconde coulisse flexible (244) se déplace sur le second plan défini par le second élément de bâti (206) pour placer le second bras (250) sur n'importe quel point du second plan.

13. L'extracteur (200) selon la revendication 9, comprenant également un ordinateur (240) commandant indépendamment un ou plusieurs états d'arrêt/marche, le sens de rotation, et la vitesse de rotation de chacun des moteurs (228a, 228c, 258a, 258c).

14. L'extracteur (200) selon la revendication 9, dans lequel chacun des doigts de levage (272) comporte une bague élastomérique souple (280) qui se dilate pour entrer en prise avec le produit (A, B) et se rétracte pour libérer le produit (A, B) ;
de préférence
comprenant également un ordinateur (240) commandant indépendamment chacun des doigts de levage (272).

15. L'extracteur (200) selon la revendication 9, comprenant également :
le premier élément de bâti (204) ayant une forme généralement rectangulaire ;
le second élément de bâti (206) ayant une forme généralement rectangulaire ;
la première coulisse flexible (214) se déplaçant sur le premier plan défini par le premier élément de bâti (204) pour placer le premier bras (220) sur n'importe quel point du premier plan ;
la seconde coulisse flexible (244) se déplaçant sur le second plan défini par le second élément de bâti (206) pour placer le second bras (250) sur n'importe quel point du second plan ;
la première courroie (211) associée au premier élément de bâti (204) étant entraînée par le fonctionnement indépendant de chacun de la paire de premier moteurs (228a, 228c) ;
la seconde courroie (211) associée au second élément de bâti (206) étant entraînée par le fonctionnement indépendant de chacun de la paire de seconds moteurs (258a, 258c); et
un ordinateur (240) commandant indépendamment un ou plusieurs états d'arrêt/marche, le sens de rotation, et la vitesse de rotation de chacun des moteurs (228 a, 228c, 258a, 258c) et commandant indépendamment chacun des doigts de levage (272) ;
de préférence
le premier trajet et le second trajet sont identiques, mais le déplacement du premier bras (220) le long du premier trajet est déphasé par rapport au déplacement du second bras (250) le long du second trajet.
